# DEMANDE DE BREVET EUROPEEN

(11) **EP 0 989 288 A1**
(43) Date de publication de la demande: **29.03.2000**
(21) Numéro de dépôt: 99402276.2
(22) Date de dépôt: 17.09.1999
(51) Int. Cl.: F01N 3/20, F01N 3/08, F02D 41/02

(54) **Dispositif de traitement des gaz d'échappement émis par un moteur à combustion interne**

(30) Priorité: 24.09.1998 FR 9811948
(71) Demandeur: RENAULT, 92109 Boulogne-Billancourt (FR)
(72) Inventeur: Baux, Antoine, 75005 Paris (FR); Beurthey, Stéphan, 91430 Vauhallan (FR)
(74) Mandataire: Fernandez, Francis Lionel

(57) **Abrégé**

Le dispositif comprend une ligne d'échappement (2) comportant un pot catalytique (3) de traitement des gaz d'un moteur (1) et des moyens de piégeage d'oxydes d'azote présents dans ces gaz, lors du fonctionnement du moteur (1) en mélange air/carburant pauvre. Le dispositif comprend en outre des moyens (4,5,6,7) pour commander la quantité d'énergie thermique dissipée par lesdits gaz entre leur sortie du moteur (1) et leur entrée dans lesdits moyens de piégeage (3), de manière à maintenir la température desdits moyens dans leur domaine de températures de fonctionnement efficace.

## Description

La présente invention est relative à un dispositif de traitement des gaz d'échappement émis par un moteur à combustion interne dans une ligne d'échappement de ces gaz comportant un pot catalytique de traitement desdits gaz et des moyens de piégeage d'oxydes d'azote présents dans ces gaz lors du fonctionnement du moteur en mélange air/carburant pauvre.

Pour réduire la pollution de l'atmosphère par les gaz d'échappement émis par les moteur à combustion interne, en particulier ceux qui assurent la propulsion des véhicules automobiles, on équipe couramment les lignes d'échappement de ces gaz d'un pot catalytique ayant pour fonction de transformer les espèces chimiques nocives contenues dans ces gaz en espèces chimiques moins nocives, voire inoffensives.

C'est ainsi que l'on connaît un pot catalytique dit "à trois voies" ou "trifonctionnel", du fait qu'il assure une triple fonction d'oxydation des hydrocarbures imbrûlés (HC), d'oxydation du monoxyde de carbone CO en gaz carbonique CO₂ et de réduction des oxydes d'azote NOx en azote gazeux.

Le souci de réduire les émissions de gaz à effet de serre, et en particulier de gaz carbonique, a provoqué de l'intérêt pour un moteur à combustion interne capable de fonctionner avec un mélange air/carburant dit pauvre, c'est-à-dire dont la richesse en carburant est inférieure à celle d'un mélange stoechiométrique.

Lorsqu'on utilise un pot catalytique trifonctionnel classique pour dépolluer les gaz d'échappement d'un tel moteur fonctionnant en mélange pauvre, on observe une très faible efficacité du pot dans sa fonction de réduction des oxydes d'azote NOx. Pour pallier cet inconvénient, on propose dans le brevet européen n° 560 991 d'utiliser un pot catalytique trifonctionnel incorporant des moyens d'adsorption, ou de piégeage, des oxydes d'azote présents dans les gaz d'échappement, lorsque le mélange air/carburant provenant du moteur est pauvre. Pour éviter que cette adsorption ne provoque à la longue une saturation de la capacité d'adsorption du pot catalytique, le brevet précité propose de commander la richesse du mélange air/carburant du moteur de manière à commuter périodiquement la richesse de ce mélange à une valeur correspondant à un mélange stoechiométrique, ou moins pauvre. Cette commutation provoque la désorption des oxydes d'azote adsorbés dans le pot puis leur réduction par les hydrocarbures imbrûlés et le monoxyde de carbone présents dans le pot du fait de l'accroissement de la richesse du mélange.

Cependant, la capacité de stockage du pot diminue avec son empoisonnement par des oxydes de soufre contenus dans les gaz d'échappement et venus du soufre présent dans le carburant. Il est donc nécessaire de purger le pot des oxydes de soufre qu'il a adsorbés. La désorption des oxydes de soufre ne peut se faire qu'à des températures élevées supérieures à celles de la plage de températures permettant de stocker les oxydes d'azote en mélange pauvre. En outre, les températures élevées de destockage des oxydes de soufre ne peuvent généralement pas être obtenues dans les conditions habituelles de roulage des véhicules automobiles. Pour accroître alors, quand cela est nécessaire, la température des gaz d'échappement jusqu'à la température permettant la désorption des oxydes de soufre, on a proposé de retarder l'instant d'allumage du mélange air/carburant contenu dans les chambre de combustion du moteur, de manière à obtenir une combustion dégradée du carburant, plus exothermique.

Ce type de stratégie présente cependant l'inconvénient d'accroître considérablement la consommation de carburant du fait même de cette dégradation. En outre, lorsque la ligne d'échappement comporte un pot catalytique trifonctionnel supplémentaire, dit d'amorçage, en amont du pot catalytique piégeant les oxydes d'azote en mélange pauvre, pour dépolluer les gaz d'échappement lors d'un démarrage à froid du moteur, la dégradation de la combustion doit être limitée pour ne pas risquer le détruire thermiquement ce pot catalytique supplémentaire. La dégradation de la combustion peut alors s'avérer insuffisante, à bas régime, pour atteindre la température de purge en oxydes de soufre du pot catalytique à piégeage des oxydes d'azote en mélange pauvre, puisque ce dernier est placé à l'extrémité de la ligne d'échappement, loin du moteur.

La présente invention a précisément pour but de fournir un dispositif de traitement des gaz d'échappement d'un moteur à combustion interne susceptible de fonctionner en mélange air/carburant pauvre, du type décrit en préambule de la présente description, conçu pour optimiser le fonctionnement du pot catalytique à piégeage des oxydes d'azote en mélange pauvre, en assurant le fonctionnement de celui-ci à cet égard dans le domaine de températures convenable, et ceci quel que soit le débit des gaz d'échappement émis par le moteur.

La présente invention a aussi pour but de réaliser un tel dispositif qui permette de réduire les surconsommations en carburant dues aux nécessaires purges en oxydes de soufre des moyens de piégeage des oxydes d'azote en mélange pauvre, tout en assurant cette purge quel que soit le débit des gaz d'échappement.

On atteint ces buts de l'invention, ainsi que d'autres qui apparaîtront à la lecture de la description qui va suivre, avec un dispositif de traitement des gaz d'échappement émis par un moteur à combustion interne dans une ligne d'échappement comportant un pot catalytique de traitement desdits gaz et des moyens de piégeage d'oxydes d'azote présents dans ces gaz, lors du fonctionnement du moteur en mélange air/carburant pauvre, ce dispositif étant remarquable en ce qu'il comprend des moyens pour commander la quantité d'énergie thermique dissipée par lesdits gaz entre leur sortie du moteur et leur entrée dans lesdits moyens de piégeage, de manière à maintenir la température desdits moyens dans leur domaine de températures de fonctionnement efficace.

Suivant un premier mode de réalisation du dispositif selon l'invention, lesdits moyens de commande comprennent au moins des première et deuxième sections de conduit d'échappement, disposées en parallèle dans la ligne d'échappement entre le moteur et ledit moyens de piégeage, ces sections étant dimensionnées et équipées pour assurer la dissipation de quantités de chaleur différentes venues des gaz les traversant, et de moyens de vanne pour commander sélectivement le débit des gaz d'échappement passant dans l'une et/ou l'autre desdites sections de conduit.

Comme on le verra plus loin en détail, ces moyens de commande permettent de régler la température de fonctionnement des moyens de piégeage d'oxydes d'azote, dans un domaine de températures assurant l'efficacité de ces moyens.

Ce dispositif comprend en outre a) des moyens d'évaluation de la quantité d'oxydes de soufre venue des gaz d'échappement qui est stockée dans lesdits moyens de piégeage des oxydes d'azote et b) des moyens pour accroître la température des gaz d'échappement quand ladite quantité dépasse un seuil prédéterminé, de manière à déclencher une purge en oxydes de soufre desdits moyens de piégeage.

Suivant un autre mode de réalisation de l'invention, lesdits moyens de commande comprennent une section de conduit de gaz d'échappement en forme de boucle de dissipation thermique, alimentée par la ligne d'échappement à travers une vanne assurant 1) la commande du sens de circulation dans la boucle des gaz entrant dans celle-ci et 2) la déflexion des gaz sortant de la boucle vers la sortie de la ligne d'échappement, les moyens de piégeage des oxydes d'azote étant disposés dans la boucle de manière à être traversés par des gaz à des températures différentes suivant le sens de circulation des gaz dans la boucle.

D'autres caractéristiques et avantages de la présente invention apparaîtront à la lecture de la description qui va suivre et à l'examen du dessin annexé dans lequel :

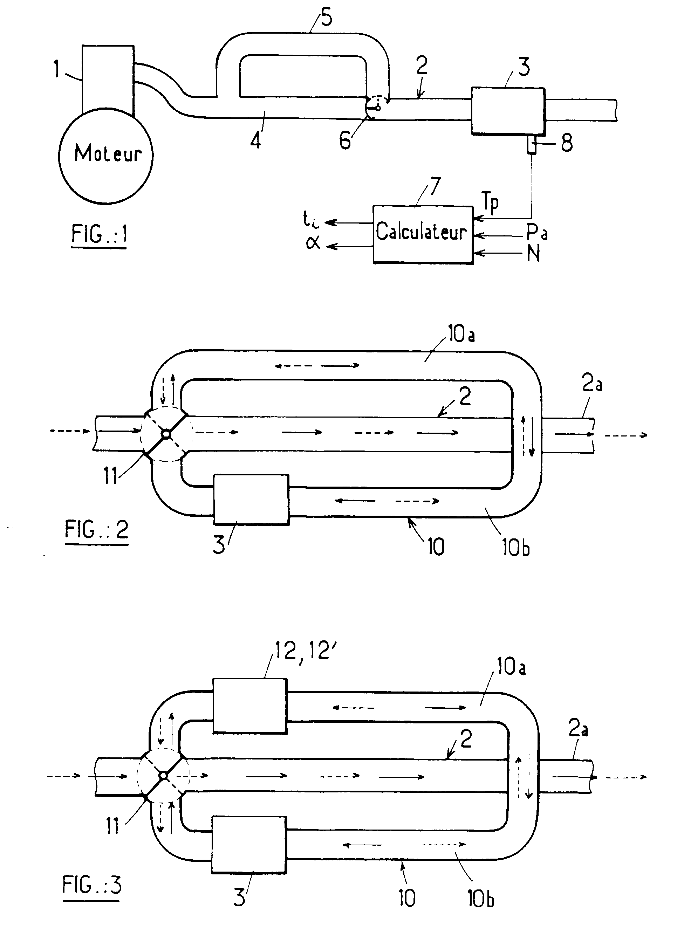

- les figures 1,2 et 3 représentent divers modes de réalisation du dispositif suivant la présente invention.

On se réfère à la figure 1 du dessin annexé, où il apparaît que le dispositif représenté comprend essentiellement, en aval d'un moteur à combustion interne 1 susceptible de fonctionner en mélange air/carburant pauvre pour propulser un véhicule automobile par exemple, une ligne d'échappement 2 comportant un pot catalytique trifonctionnel 3, intégrant des moyens de piégeage des oxydes d'azote lors du fonctionnement du moteur en mélange air/carburant pauvre, ces moyens de piégeage étant bien connus en eux-mêmes.

Dans la suite, il est entendu que ces moyens de piégeage peuvent aussi bien être intégrés physiquement au pot catalytique trifonctionnel 3 que disposés dans un pot catalytique particulier, installé en série avec le pot catalytique trifonctionnel.

Comme indiqué ci-dessus, la présente invention a pour but de régler la température du pot 3 de manière à assurer un fonctionnement efficace de celui-ci quand il doit stocker des oxydes d'azote pendant que le moteur 1 consomme un mélange air/carburant pauvre. Il faut alors que la température du pot soit située dans un domaine de températures [T₁,T₂] prédéterminé. A titre d'exemple, T₁,T₂ peuvent être de l'ordre de 200° C et de 450° C, respectivement. La température du pot doit naturellement se trouver dans ce domaine quel que soit le mode de fonctionnement du moteur, qui influe évidemment sur le débit et la température des gaz d'échappement, ceux-ci étant différents lors d'un démarrage à froid du moteur de ce qu'ils sont, par exemple, lors d'un fonctionnement du moteur à régime élevé et stabilisé, lorsque le véhicule propulsé par le moteur circule sur route ou autoroute, par exemple.

Pour régler la température du pot, le dispositif suivant l'invention comporte, entre le moteur 1 et le pot 3, des moyens de commande de la quantité d'énergie thermique dissipée par les gaz d'échappement, de manière à moduler le chauffage du pot 3 par ces gaz. Suivant un premier mode de réalisation du dispositif selon l'invention représenté à la figure 1, ces moyens comprennent, dans la ligne d'échappement 2 et en amont du pot 3, des première et deuxième sections 4,5 respectivement, de conduit d'échappement, disposées en parallèle comme représenté, et des moyens de vanne 6 pour commander sélectivement le débit des gaz d'échappement passant dans les sections 4 et 5.

A sections de conduit et nature du matériau constituant les sections 4 et 5 identiques, il est évident que la section 5, plus longue, provoque une dissipation de l'énergie thermique contenue dans les gaz qui la traversent plus forte que celle due à la section 4. On peut alors, en commandant la vanne 6, faire passer les gaz d'échappement soit dans l'une soit dans l'autre des sections, soit dans les deux sections, suivant la température régnant dans le pot, de manière à échauffer ou refroidir celui-ci pour le maintenir dans le domaine de températures [T₁,T₂].

La commande de la vanne 6 est assurée par un calculateur 7 de gestion du moteur qui assure par ailleurs les fonctions classiques bien connues d'un tel calculateur, telles que par exemple le réglage du temps d'ouverture tᵢ d'injecteurs de carburant dans les chambres de combustion du moteur, le réglage de l'avance à l'allumage a du mélange air/carburant admis dans le moteur, etc... à partir de mesures de paramètres d'entrée tels que la pression d'admission Pₐ et le régime N du moteur, etc...

Un capteur de température 8 permet au calculateur 7 de connaître la température Tp du pot et donc d'assurer, par une action convenable sur la vanne 6, la régulation de cette température dans le domaine de températures précité. En variante, comme il est bien connu, ce capteur de température peut être remplacé par un logiciel d'évaluation de la température du pot, exécuté par le calculateur 7.

Bien entendu, on peut agir sur les pertes thermiques des sections de conduit 4,5 en équipant celles-ci, et notamment la section 5, de moyens additionnels bien connus de dissipation thermique tels que : ailettes de refroidissement, circuit de refroidissement par un fluide tel que l'air ou l'eau, etc...

On va maintenant décrire le fonctionnement du dispositif de la figure 1, d'abord pour optimiser la fonction "piégeage des oxydes d'azote en mélange pauvre" du pot 3, puis pour optimiser la fonction "purge des oxydes de soufre" empoisonnant le pot 3, et ceci dans les diverses phases de fonctionnement d'un moteur à combustion interne.

Au démarrage à froid de celui-ci, il convient que le pot 3 monte en température le plus vite possible pour entrer dans le domaine de températures [T₁, T₂], avec T₂ > T₁. Pour ce faire, le calculateur 7 est dûment programmé pour commander la vanne 6 de manière que celle-ci empêche les gaz d'échappement de passer dans la section de dérivation 5, tous les gaz passant alors dans la section 4, aux moindres pertes thermiques. La température du pot montant, celle-ci franchit le seuil T₁, puis le seuil T₂. Au franchissement de ce dernier seuil, il convient de refroidir le pot pour que sa température reste dans le domaine [T₁,T₂]. Pour ce faire, le calculateur 7 commute la vanne 6 dans la position où elle commande le passage des gaz d'échappement dans la section de conduit 5, à forte dissipation thermique. En variante, on pourrait aussi positionner la vanne 6 dans une position intermédiaire de manière à autoriser le passage des gaz d'échappement à la fois dans les conduits 4 et 5. Quand la température Tₚ du pot 3 repasse en dessous de T₁, le calculateur bascule la vanne de nouveau pour que le gaz repasse dans la section 4, à moindres pertes thermiques. La régulation de la température du pot dans le domaine [T₁, T₂] s'effectue ainsi par des basculements adéquats de la vanne 6 sous la commande du calculateur 7.

Quand le moteur 1 est équipé d'injecteurs de carburant assurant une injection directe de ce carburant dans les chambres de combustion du moteur, le dispositif suivant l'invention peut comprendre des moyens additionnels de réchauffage des gaz d'échappement lors d'un démarrage à froid du moteur, propres à accélérer le chauffage du pot 3. Selon l'invention, le calculateur 7 gère alors l'alimentation du moteur en carburant comme suit. On injecte, en phase d'admission ou de compression du moteur, une masse d'essence M₁ à brûler, telle qu'il reste de l'oxygène dans les gaz d'échappement formés par la combustion de la masse M₁. Pendant la phase de détente subséquente des gaz ainsi formés, le calculateur injecte une deuxième masse de carburant M₂ dans les gaz de combustion. La combustion de cette masse de carburant M₂ dans l'oxygène restant dans lesdits gaz en cours de détente produit peu de travail mais beaucoup de chaleur. Cette stratégie de "double injection", qui permet d'accélérer le réchauffage du pot, est détaillée dans la demande de brevet français n° 98 06961 déposée le 3 juin 1998 par la demanderesse. En variante, on pourrait commander la deuxième injection en phase d'échappement de manière à produire beaucoup d'hydrocarbures imbrûlés.

On va décrire maintenant la stratégie exécutée par le calculateur 7 du dispositif suivant l'invention pour purger le pot en oxydes de soufre. Le calculateur 7 est dûment programmé pour calculer en permanence la quantité d'oxydes de soufre stockée dans le pot 3, comme décrit par exemple dans la demande de brevet français précitée. Quand cette quantité atteint un seuil prédéterminé à ne pas dépasser, le calculateur 7 commande le temps d'ouverture tᵢ des injecteurs du moteur de manière à former un mélange air/carburant plus exothermique que le mélange pauvre normalement brûlé dans le moteur 1. Le calculateur commande aussi la vanne 6 de manière que les gaz d'échappement passent par la section 4 à faibles pertes thermiques. Si la température ainsi atteinte par le pot 3 n'est pas suffisante pour permettre la purge du pot en oxydes de soufre, on peut élever encore cette température par la stratégie de "double injection" ou encore par la stratégie de réduction du retard à l'allumage du mélange air/carburant, évoquées ci-dessus.

Il apparaît maintenant que l'invention permet bien d'atteindre les buts annoncés, à savoir porter le pot catalytique à la température convenable pour assurer le piégeage des oxydes d'azote émis en mélange pauvre, aussi bien pendant une phase de démarrage à froid du moteur que lors d'un fonctionnement en régime courant, après la montée en température du moteur. La température convenable du pot pouvant être ainsi atteinte plus rapidement qu'avant la présente invention, il est possible de commencer plutôt à faire fonctionner le moteur en mélange pauvre, ce qui permet de faire décroître la consommation en carburant du moteur.

La stratégie de purge du pot en oxydes de soufre décrite ci-dessus permet, moteur chaud, de faire croître la température du pot jusqu'à une valeur convenable par une simple action sur les moyens de commande de dissipation thermique décrits ci-dessus, soit sans accroître la consommation en carburant du moteur. Aux faibles charges ou au démarrage à froid, l'invention prévoit de dégrader sensiblement la combustion, au prix d'un accroissement de la consommation, de manière à atteindre la température du pot souhaitée pour la purge ou désorption des oxydes de soufre.

On a décrit ci-dessus les caractéristiques du -dispositif suivant l'invention qui permettent de traiter le problème du piégeage des oxydes d'azote et celui de la purge en oxydes de soufre, problèmes qui sont liés au fonctionnement du moteur en mélange pauvre. Dans les phases de fonctionnement du moteur en mélange stoechiométrique ou riche, le traitement des espèces polluantes contenues dans les gaz d'échappement est exécuté par le pot trifonctionnel 3 et/ou par un pot catalytique dit d'amorçage, également trifonctionnel, placé entre le moteur 1 et les sections de conduit 4,5.

On se réfère maintenant à la figure 2 du dessin annexé où l'on a représenté un deuxième mode de réalisation du dispositif suivant l'invention. Dans cette figure et la suivante, des références numériques identiques à des références déjà utilisées sur la figure 1 repèrent des éléments ou organes identiques ou analogues. Le dispositif de la figure 2 comprend des moyens de commande de dissipation thermique constitués par une section 10 de conduit d'échappement en forme de boucle alimentée en gaz à travers une vanne 11 placée à la jonction de cette boucle et de la ligne d'échappement 2 elle-même raccordée, sur la gauche du dessin, à un moteur à combustion interne (non représenté) tel que le moteur 1 de la figure 1.

Sous la commande d'un calculateur tel que le calculateur 7 du dispositif de la figure 1, la vanne 11 oriente la circulation du gaz d'échappement dans la boucle 10, soit dans le sens des flèches en trait plein quand elle se trouve dans la position représentée à la figure 2, soit dans le sens des flèches en trait interrompu, inverse, quand elle occupe une position décalée d'un quart de tour par rapport à celle représentée. Dans l'une ou l'autre de ces positions de la vanne 11, les gaz entrant dans la boucle 10 circulent sur toute la longueur de cette boucle avant d'être renvoyés par la même vanne 11 dans la ligne d'échappement 2, en direction de sa sortie 2a.

Avantageusement, la boucle 10 comprend essentiellement deux portions 10a, 10b en série s'étendant chacune sensiblement parallèlement à la ligne d'échappement 2 proprement dite, suivant une disposition qui limite l'encombrement de cette boucle sous le châssis d'un véhicule automobile, par exemple.

Un pot catalytique 3, trifonctionnel et à piégeage des oxydes d'azote en mélange pauvre, est traversé par la portion 10b de la boucle 10, plus près de la vanne 11 que de la jonction de ces deux portions qui est opposée à celle où se trouve la vanne 11.

On comprend qu'ainsi les gaz d'échappement ne parviennent dans le pot 3 qu'après avoir parcouru une grande partie de la boucle 10 dans le sens des flèches en trait plein, la vanne 11 étant alors dans la position représentée à la figure 2. Ce long trajet est responsable d'une forte dissipation de l'énergie thermique contenue dans les gaz d'échappement.

Par contre, quand la vanne 11 est dans la position qui fait circuler les gaz dans l'autre sens (flèches en trait interrompu), ceux-ci parviennent au pot 3 après un trajet court, peu dissipatif, les gaz arrivant alors dans le pot beaucoup plus chauds que dans le cas évoqué ci-dessus. On comprend qu'en jouant sur les différences de dissipation thermique obtenues en agissant sur la position de la vanne 11, on peut réguler la température du pot 3 comme expliqué ci-dessus en liaison avec le dispositif de la figure 1.

Le schéma de la figure 3 illustre d'autres modes de réalisation du dispositif suivant l'invention, dérivant de celui de la figure 2 et permettant de tirer profit de la présence de la boucle 10, par l'installation d'un deuxième pot catalytique (12;12').

Suivant une première variante, ce pot 12 est muni de moyens de piégeage des seuls oxydes de soufre. Quand le moteur 1 fonctionne en mélange pauvre, la vanne 11 est placée de manière à faire passer les gaz d'échappement dans la boucle d'abord par le pot 12. Celui-ci est alors fortement chauffé par les gaz d'échappement, peu refroidis, les oxydes de soufre contenus dans ces gaz étant alors piégés par le pot 12. Ainsi, à leur passage dans l'autre pot 3, à piégeage des oxydes d'azote, les gaz sont débarrassés des oxydes de soufre qui n'empoisonnent donc plus ce pot 3. Celui-ci garde alors toute sa capacité de piégeage des oxydes d'azote en mélange pauvre.

Le pot 12 se saturant en oxydes de soufre, le calculateur 7 vient à déterminer qu'une purge de ce pot est nécessaire et commande une inversion de la position de la vanne 11. Les gaz traversent alors d'abord le pot 3, les oxydes de soufre destockés par le pot 12 passant directement dans la ligne d'échappement 2, sans empoisonner le pot 3.

En variante, on remplace dans le dispositif de la figure 3, le pot 12 de piégeage des oxydes de soufre par un pot 12' de piégeage des hydrocarbures imbrûlés HC. Comme on l'explique ci-dessous, cette variante permet, lors d'un démarrage à froid du moteur, de réduire sensiblement la quantité d'hydrocarbures relarguée dans l'environnement, qui représente 90 % environ du total des émissions d'hydrocarbures des véhicules automobiles.

Lors d'un tel démarrage, la vanne 11 conduit les gaz d'échappement d'abord à travers le pot trifonctionnel 3 puis à travers le pot 12' à piégeage des hydrocarbures imbrûlés. Le pot 3 voit alors sa température s'accroître tandis que le pot 12' stocke les hydrocarbures imbrûlés, présents en quantité importante lors d'un démarrage à froid, aussi longtemps que sa température n'atteint pas un seuil T₃ = 170° environ, température à laquelle il relargue les hydrocarbures imbrûlés. On peut calculer la distance qui doit séparer, dans la boucle 10, les deux pots pour que le pot 12' atteigne la température T₃ après que le pot 3 ait atteint lui-même sa température de fonctionnement normal, à laquelle il transforme les hydrocarbures imbrûlés en gaz carbonique et en eau. Suivant l'invention, le calculateur inverse alors la vanne 11 juste avant le début du relarguage des hydrocarbures imbrûlés par le pot 12', de manière que les gaz passent successivement à travers les pots 12' et 3, dans cet ordre. Les hydrocarbures imbrûlés relarguées par le pot 12' sont alors traités par le pot 3 et non rejetés dans l'environnement.

Bien entendu, l'invention n'est pas limitée aux modes de réalisation décrits et représentés qui n'ont été donnés qu'à titre d'exemples. C'est ainsi que, dans les modes de réalisation de la figure 1, on pourrait remplacer le fonctionnement en "tout ou rien" des vannes 6 et 11 par un fonctionnement "analogique" permettant de graduer progressivement les quantité de gaz envoyées simultanément dans les deux sections de conduit 4,5 de manière à réchauffer plus progressivement le ou les pots catalytiques présents dans le dispositif.

## Revendications

1. Dispositif de traitement des gaz d'échappement émis par un moteur (1) à combustion interne dans une ligne d'échappement (2) comportant un pot catalytique (3) de traitement desdits gaz, des moyens de piégeage d'oxydes d'azote présents dans ces gaz, lors du fonctionnement du moteur (1) en mélange air/carburant pauvre, et des moyens (4,5,6,7) pour commander la quantité d'énergie thermique dissipée par lesdits gaz entre leur sortie ou moteur (1) et leur entrée dans lesdits moyens de piégeage, de manière à maintenir la température desdits moyens dans leur domaine de températures (T₁,T₂) de fonctionnement efficace, caractérisé en ce que lesdits moyens de commande comprennent une section de conduit de gaz d'échappement en forme de boucle (10) de dissipation thermique, alimentée par ladite ligne (2) à travers une vanne (11) assurant 1) la commande du sens de circulation dans la boucle (10) des gaz entrant dans celle-ci et 2) la déflexion des gaz sortant de la boucle (10) vers la sortie (2a) de la ligne d'échappement (2), les moyens de piégeage (3) des oxydes d'azote étant disposés dans la boucle (10) de manière à être traversés par des gaz à des températures différentes suivant le sens de circulation des gaz dans la boucle (10).

2. Dispositif conforme à la revendication 1, caractérisé en ce que ladite boucle comprend essentiellement deux portions (10a,10b) de boucle en série s'étendant chacune sensiblement parallèlement à une portion de la ligne d'échappement (2).

3. Dispositif conforme à la revendication 2, caractérisé en ce qu'une des deux portions (10b) de boucle traverse un pot catalytique (3) à trois voies équipé en outre desdits moyens de piégeage d'oxydes d'azote (NOx).

4. Dispositif conforme à la revendication 3, caractérisé en ce que l'autre (10a) desdites portions de boucle comprend des moyens (12) de piégeage d'oxydes de soufre exclusivement, contenus dans lesdits gaz d'échappement.

5. Dispositif conforme à la revendication 4, caractérisé en ce que, en mélange air/carburant pauvre, les moyens de commande de dissipation thermique commandent une circulation des gaz d'échappement dans ladite boucle (10) d'abord à travers les moyens (12) de piégeage en oxydes de soufre (SOx) puis à travers les moyens (3) de piégeage d'oxydes d'azote (NOx), lesdits moyens de commande inversant le sens de circulation des gaz dans la boucle (10) quand la quantité d'oxydes de soufre piégée dépasse un seuil prédéterminé.

6. Dispositif conforme à la revendication 3, caractérisé en ce que l'autre (10a) desdites portions de boucle comprend des moyens (12') de piégeage d'hydrocarbures imbrûlés (HC) contenus dans lesdits gaz d'échappement.

7. Dispositif conforme à la revendication 6, caractérisé en ce que, lors d'un démarrage à froid du moteur, les moyens de commande (7,10) de dissipation thermique font passer les gaz d'échappement dans la boucle (10) d'abord dans le pot catalytique trifonctionnel (3) puis dans les moyens (12') de piégeage des hydrocarbures imbrûlés (HC), jusqu'à ce que lesdits moyens (12') atteignent une température prédéterminée à laquelle lesdits moyens relarguent lesdits hydrocarbures piégés, lesdits moyens de commande (7,11) inversant alors le sens de circulation des gaz dans la boucle (10) de manière que les hydrocarbures relargués soient traités dans le pot catalytique trifonctionnel (3), porté préalablement à sa température de fonctionnement par les gaz d'échappement qui le traversent.
